# EUROPÄISCHE PATENTSCHRIFT

(11) **EP 2 321 175 B1**
(45) Veröffentlichungstag und Bekanntmachung des Hinweises auf die Patenterteilung: **16.01.2013**
(21) Anmeldenummer: 09777440.0
(22) Anmeldetag: 24.07.2009
(51) Int. Cl.: B64D 9/00, B64F 1/32

(54) **BELADUNGSSYSTEM UND VERFAHREN ZUM BELADEN EINES LADERAUMS EINES FLUGZEUGS**
LOADING SYSTEM AND METHOD FOR LOADING A CARGO HOLD OF AN AIRCRAFT
SYSTÈME ET PROCÉDÉ DE CHARGEMENT DE LA SOUTE D'UN AVION

(30) Priorität: 24.07.2008 DE 102008034576; 13.11.2008 DE 102008057076
(43) Veröffentlichungstag der Anmeldung: 18.05.2011
(60) Teilanmeldung: 11176110.2
(73) Patentinhaber: Telair International GmbH, 83714 Miesbach (DE)
(72) Erfinder: HUBER, Thomas, 83727 Schliersee (DE)
(74) Vertreter: Bohnenberger, Johannes
(86) Internationale Anmeldenummer: PCT/EP2009/005404
(87) Internationale Veröffentlichungsnummer: WO 2010/009899

(56) Entgegenhaltungen:
- WO-A1-94/27117
- WO-A2-2006/035401
- DE-A1- 10 338 704
- US-A1- 2002 130 778
- US-A1- 2006 038 077

## Beschreibung

Die Erfindung betrifft ein Beladungssystem zum Beladen eines Laderaums eines Flugzeugs nach dem Oberbegriff des Patentanspruches 1 sowie ein entsprechendes Verfahren.

Frachtgut wird in hohen Stückzahlen in Containern, auf Paletten oder dergleichen ULDs (unit-load-device) in zunehmendem Maße in Flugzeugen transportiert. Hierbei kommt es darauf an, dass der Belade- und der Entladevorgang schnell und sicher vor sich gehen. Das Frachtgut muss im Laderaum des Flugzeugs korrekt verstaut werden, so dass auch bei einem unruhigen Flug keine Beschädigung auftritt. Probleme liegen also einerseits im Bereich der Logistik, also des Planens und Nachvollziehens der Transportwege und -zeiten, andererseits im Bereich der Be- und Entladevorgänge selbst.

Der Erfindung liegt die Aufgabe zu Grunde, ein Beladungssystem zum Beladen eines Laderaums eines Flugzeugs sowie ein entsprechendes Verfahren dahin gehend weiter zu bilden, dass dessen Sicherheit und Geschwindigkeit verbessert werden.

Diese Aufgabe wird vorrichtungsmäßig durch ein Beladungssystem nach Anspruch 1 und verfahrensmäßig durch ein Beladungsverfahren nach Anspruch 15 gelöst.

Insbesondere wird die Aufgabe durch ein Beladungssystem zum Beladen eines Laderaums eines Flugzeugs gelöst, wobei Container, Paletten oder dergleichen unit-load-devices (ULD) zur Aufnahme von Frachtgut durch eine Zugangsöffnung in den Laderaum eingebracht, mittels Fördereinrichtungen transportiert und in Beförderungspositionen befestigt werden. Es sind mit den ULDs verbundene Identifizierungseinrichtungen, insbesondere RFID-Transponder vorgesehen, welche Speichereinrichtungen zum Speichern von ersten Daten, insbesondere von Identifizierungsdaten aufweisen. Es ist mindestens eine erste Leseeinrichtung zum Lesen der ersten Daten der in den Laderaum eingebrachten ULDs vorgesehen. Weiterhin ist mindestens eine erste Sendeeinrichtung zum Senden der ersten Daten an mindestens einen Empfänger vorgesehen. Auf diese Weise ist es möglich, den beteiligten Logistikunternehmen exakt mitzuteilen, wann, wo und wie das zu transportierende Frachtgut in den Laderaum des Flugzeugs eingebracht wurde, so dass die weitere Planung erleichtert wird.

Vorzugsweise ist das Flugzeug bzw. der Frachtraum mit einem Lade-Steuercomputer versehen, wie er beispielsweise aus der DE 103 38 704 A1 (nächstliegender Stand der Technik) an sich bekannt ist. Dieser Lade-Steuercomputer ist derart ausgebildet, dass die im Laderaum vorgesehenen Fördereinrichtungen teils selbsttätig, teils durch das Ladepersonal gesteuert werden, um das Frachtgut an die für jede ULDs bzw. jeden Container oder jede Palette vorgesehenen Platz im Laderaum zu bringen. Weiterhin werden durch den Lade-Steuercomputer die Fördereinrichtungen, z.B. Rollenfördereinrichtungen (PDU - Power Drive Unit), überwacht. Wenn diese Fördereinrichtungen Fehler aufweisen, z.B. unbrauchbar werden, so werden die Fehler als "zweite Daten" vom Lade-Steuercomputer erfasst und können über die ihm zugeordnete (im Lade-Steuercomputer angeordnete oder mit ihm verbundene) oben genannte erste Sendeeinrichtung dem Wartungspersonal mitgeteilt werden, das am Zielort des Flugzeugs die Reparaturarbeiten vorbereiten und später durchführen kann. Auf diese Weise werden Wartungs- und Reparaturzeiten minimiert und die für die Logistikdaten vorgesehene erste Sendeeinrichtung wird optimal genutzt.

Die erste Sendeeinrichtung ist vorzugsweise derart ausgebildet, dass die ersten und/oder zweiten Daten vor einem Start des Flugzeugs gesendet werden. Auf diese Weise können keine Störungen (EMI) der Flugzeugkomponenten auftreten.

Die Daten können insbesondere so lange gesendet werden, wie das Frachtsystem "mit Power versehen" ist. Dies ist üblicherweise zumindest vom Öffnen des Frachttores bis zum Schließen des Frachttores der Fall. Das Frachttor kann hierbei nicht nur bei einer aktuellen Beladung sondern auch während der Wartung oder anderer "Ground-Zeiten" offen sein. Insbesondere sollte die Sendeeinrichtung dann Daten senden, wenn es sich lohnt, also nur dann in Betrieb genommen werden, wenn komplette, irgendeinen Vorgang vollständig beschreibende Datenblöcke vorliegen.

Weiterhin kann die erste Sendeeinrichtung derart ausgebildet sein, dass die oben genannten ersten und/oder zweiten Daten oder aber auch dritte Daten, welche Positionsdaten des Flugzeugs umfassen, während des Fluges unter Einbeziehung einer zweiten Sendeeinrichtung, die im Flugzeug installiert ist, gesendet werden. Auf diese Weise können z.B. die oben erwähnten Daten auch zu einem späteren, nach dem Beladen liegenden Zeitpunkt gesendet werden. Darüber hinaus kann eine weitere Verfolgung der Ladung stattfinden, so dass auch Flugabweichungen (z.B. Umleitung auf einen anderen Zielflughafen) registriert und dem Kunden mitgeteilt werden, die ansonsten dem Kunden erst zu einem späteren Zeitpunkt bekannt würden. Auch dann, wenn zum Zeitpunkt der Beladung, wenn eigentlich das Senden der Daten erfolgen sollte, Netzstörungen vorliegen, können die Daten auf diese Weise korrekt gesendet werden.

Die erste Leseeinrichtung ist vorzugsweise an der Zugangsöffnung zum Laderaum derart ausgebildet und angebracht, dass die Frachtgutdaten während eines Durchquerens der Zugangsöffnung gelesen werden. Damit ist sichergestellt, dass jede, mit einem RFID-Transponder ausgerüstete ULD sicher identifiziert wird, da die Leseeinrichtung lediglich einen definierten Querschnitt erfassen muss. Darüber hinaus kann hier eine Vielzahl von Lesevorrichtungen derart angebracht sein, dass die von der Leseeinrichtung erfassbare Maximaldistanz zum RFID-Transponder sicher unterschritten wird.

Die Identifizierungseinrichtungen weisen vorzugsweise beschreibbare Speichereinrichtungen zum Speichern von das Frachtgut beschreibenden Daten auf. Damit kann beim Beladen eines Containers oder einer Palette der daran angebrachte RFID-Transponder mit einer "Frachtliste" programmiert werden, was wiederum die Identifizierung des Frachtguts und dessen Verfolgung erleichtert.

Im Laderaum und/oder an den ULDs können Umweltsensoren zum Aufnehmen von Umweltdaten, z.B. Temperatur oder Feuchtigkeit vorgesehen sein, wobei die Daten in den Identifizierungseinrichtungen gespeichert und/oder über die erste Sendeeinrichtung, insbesondere zusammen mit Zeitsignalen gespeichert und/oder gesendet werden. Auf diese Weise ist es möglich, die "Qualität" des Transports zu überwachen und nachverfolgbar zu machen, so dass die Ursachen von gegebenenfalls am Frachtgut auftretenden Schäden protokolliert werden können. Natürlich kann auch dadurch nachgewiesen werden, dass die Schäden verursachenden Umwelteinflüsse während des Transports im Flugzeug eben nicht aufgetreten sind.

Zumindest die erste Sendeeinrichtung ist vorzugsweise zum Senden von Signalen in Mobilfunknetze ausgebildet. Derartige Netze sind heutzutage zumindest an Flughäfen praktisch immer verfügbar. Weiterhin ist es von Vorteil, wenn (ggf. zusätzlich) eine Satellitenkommunikationseinrichtung vorgesehen ist. Dadurch wäre eine vollständige Unabhängigkeit von lokalen Netzen erreichbar. Von Vorteil ist es weiterhin, wenn die Sendeeinrichtungen Sende-/Empfangseinrichtungen mehrerer Standards in Bezug auf Arbeitsfrequenzen, Kodierung und Protokolle aufweisen, um so sicherzustellen, dass an jedem Standort des Flugzeugs öffentliche Netze zur Verfügung stehen. Ähnliches gilt auch zumindest für die erste Leseeinrichtung, die vorzugsweise zur Kommunikation mit den Identifizierungseinrichtungen basierend auf verschiedenen Standorten ausgebildet ist, z.B. bei RFID-Transpondern, welche bei 868 MHz oder 915 MHz arbeiten. Insbesondere dann, wenn aufgrund nationaler Vorschriften bestimmte Standards (bezüglich des nutzbaren Frequenzbereichs) vorgeschrieben sind, ist es von Vorteil, wenn sowohl die RFID-Transponder als auch die Leseeinrichtung alle diese verschiedenen Standards erfüllen können. Es werden also sozusagen "Sets", bestehend aus RFID-Transpondern und Leseeinrichtungen vorgeschlagen, welche je nach Benutzungsort auf den einen oder den anderen Standard umstellbar sind.

Der oben genannte mindestens eine erste Empfänger ist vorzugsweise zur Weitergabe empfangener Daten an weitere Empfänger, insbesondere an Logistikzentren, Wartungszentren oder Kunden ausgebildet. Dieser erste Empfänger stellt somit einen Server dar, der ein Netz verwaltet.

Weiter oben wurde erläutert, dass Frachtgutdaten in dem RFID-Transponder gespeichert werden, der an den ULDs angebracht ist. Alternativ oder zusätzlich wird diese erste Leseeinrichtung oder aber auch eine zweite Leseeinrichtung zum Lesen zweiter Daten ausgebildet sein, welche in weiteren Identifizierungseinrichtungen (z.B. RFID-Transponder) gespeichert sind, die mit dem Frachtgut verbunden sind. Dieses Lesen der Daten kann durch Antikollisionsverfahren oder Pulk-Erkennung beim Durchgang durch die Zugangsöffnung erfolgen. Das Beschreiben der Identifizierungseinrichtungen an den ULDs kann auch zu diesem Zeitpunkt erfolgen; ein paralleles Speichern von "Frachtlisten" also Listen, welche die einzelnen Frachtgutstücke bestimmten ULDs (Containern) zuordnen, kann natürlich auch extern, z.B. im Lade-Steuercomputer oder im oben genannten ersten Empfänger (Server) erfolgen und von dort wieder abgerufen werden. Vorzugsweise ist die erste Leseeinrichtung mit einer Erkennungsvorrichtung verbunden, welche die Anwesenheit einer ULD, also eines Containers, einer Palette oder dergleichen, bei der ersten Leseeinrichtung feststellt, um ULDs ohne Identifizierungseinrichtungen zu erkennen. Auf diese Weise sind derartige ULDs (Container) manuell identifizierbar und deren Daten können über eine manuelle Eingabe (z.B. über den Lade-Steuercomputer) an den ersten Empfänger gesendet werden. Für solche Fälle der nicht mit einem RFID-Transponder geeigneter Bauart versehenen ULD ist es möglich, gesonderte, für derartige Fälle eigens vorgehaltene Identifizierungseinrichtungen vorzusehen, die mit der ULD für das Frachtgut fest aber wieder lösbar verbunden werden können.

Vorzugsweise umfasst der Lade-Steuercomputer Speichereinrichtungen zum Speichern und Eingabeeinrichtungen zum Eingeben von Soll-Frachtgutdaten. Es sind Vergleichseinrichtungen vorgesehen, um die zweiten Daten der zweiten Identifizierungseinrichtung mit den Soll-Frachtgutdaten zu vergleichen und Warnmeldungen abzugeben, wenn keine Übereinstimmung besteht. Diese zweiten Daten beinhalten ja - wie oben ausgeführt - Daten einzelner Frachtgutstücke, mit denen die Identifizierungseinrichtungen verbunden sind. Dies bedeutet, dass eine Überprüfung des einzuladenden und eingeladenen Frachtgutes sowohl anhand von solchen Daten stattfinden kann, die in den RFID-Transpondern gespeichert sind, welche an den ULDs angebracht sind oder eben an den Frachtgutstücken selbst. Wenn hier keine Übereinstimmung besteht, kann eine entsprechende Warnmeldung abgegeben werden, so dass schnell Fehlbeladungen nachgewiesen werden können.

Bekanntlich werden in verschiedenen Ländern verschiedene Standards in Mobilfunknetzen verwendet. Es ist nun von Vorteil, wenn eine Standard-Erkennungseinrichtung vorgesehen ist, die entweder aufgrund von Positionsdaten (wo sich das Flugzeug befindet) oder aufgrund von Testsignalen die Sendeeinrichtungen entsprechend am Standort gültigen Standards zum Senden von Daten einstellt.

Ein ähnliches Problem besteht mit Standards von Speichereinrichtungen bzw. den dazu gehörigen Leseeinrichtungen. Wenn man RFID-Transponder verwendet (andere Transponder sind natürlich auch möglich), so sind in den USA andere Frequenzbänder zugelassen als in Europa. Vorzugsweise wird darum die Leseeinrichtung derart ausgebildet, dass sie die verschiedenen Standards durchprüft und sich dann auf einen bestimmten Standard einstellt, wenn eine Identifizierungseinrichtung auf einen Signalempfang der in diesem Standard sendenden Leseeinrichtung antwortet. Insbesondere dann, wenn ULDs aus verschiedenen Ländern stammen und darum auch verschiedene Speichereinrichtungen aufweisen, die nach verschiedenen Standards arbeiten, ist eine sichere Funktion des Systems gewährleistet.

Die im Flugzeug vorgesehenen Fördereinrichtungen (z.B. PDUs) zum Bewegen der ULDs im Laderaum sind vorzugsweise über Buseinrichtungen mit dem Lade-Steuercomputer verbunden. Es können nun Leseeinrichtungen bei oder an den PDUs angeordnet sein, deren Ausgangssignale über die Buseinrichtung dem Lade-Steuercomputer übermittelbar sind. Auf diese Weise ist eine gesonderte Verdrahtung der Leseeinrichtungen nicht notwendig. Weiterhin ist es auf diese Weise möglich, eine Vielzahl von Leseeinrichtungen im Frachtraum so anzubringen, dass auch trotz hoher Beladegeschwindigkeit immer genügend Zeit bleibt, um Lesevorgänge durchzuführen. Besonders dann, wenn Lesevorrichtungen an Endpositionen von ULDs vorgesehen sind, kann ein exaktes Auslesen und Verifizieren von Frachtgutdaten einschließlich deren Position im Frachtladeraum sichergestellt werden, was wiederum die Beladung und damit das Trimmen eines Flugzeugs erleichtert.

Diese Leseeinrichtungen können weiterhin Sensoreinrichtungen umfassen, die an den Fördereinrichtungen (PDUs) in an sich bekannter Weise zum Feststellen der Anwesenheit von ULDs angebracht sind. Es werden also in diesem Fall ein und dieselben Sensoreinrichtungen zu verschiedenen Zwecken verwendet. Es ist ersichtlich, dass in diesem Fall die Identifizierungseinrichtungen auch optisch lesbare "Markierungen" umfassen, die von optischen Sensoren der PDUs abgetastet werden können.

Die Identifizierungseinrichtungen können darüber hinaus Abmessungsdatenspeichereinrichtungen umfassen, in denen Abmessungen der dazugehörigen ULDs einschließlich des in der ULD gespeicherten Frachtguts speicherbar sind. Diese Daten werden von der Leseeinrichtung derart ausgelesen, dass im Lade-Steuercomputer ein günstiger, kollisionsfreier Stauplatz für jede individuelle ULD im Laderaum feststellbar ist. Besonders vorteilhaft ist dies beispielsweise dann, wenn auf eine Palette Frachtgut geladen wird, welches über die Palette vorsteht.

Die Identifizierungseinrichtungen können im Prinzip überall an einer ULD angebracht werden. Dann, wenn die ULD als Container oder Palette ausgebildet ist, werden die Identifizierungseinrichtungen vorteilhafterweise in einem nach außen vorspringenden Unterrand des Containers oder der Palette angebracht. Diese nach außen vorspringenden Unterränder sind ohnehin notwendig, um die ULDs an ihrem Stauplatz zu verankern. Diese spezielle Anbringungsart hat mehrere Vorteile. Zum einen sind die Identifizierungseinrichtungen dann immer möglichst weit außen an einer ULD angebracht, so dass beim Einfahren in den Laderaum die größtmögliche Nähe zur Leseeinrichtung sichergestellt ist. Zum anderen ist damit sichergestellt, dass die Identifizierungseinrichtungen in einer definierten Höhe sitzen, wobei eine bodennahe Anbringung den zusätzlichen Vorteil aufweist, dass die Leseeinrichtung auch im Boden des Frachtraums sitzen kann, so dass die Leseeinrichtung auch dann nicht mit Frachtgut kollidiert, wenn sie in einem von den ULDs überfahrenen Bereich sitzt. Hierbei wird der Unterrand der ULDs vorzugsweise als Hohlkörper oder als Hohlprofil ausgebildet und in dem Bereich, in welchem Antenneneinrichtungen der Identifizierungseinrichtungen vorgesehen sind, aus einem für elektromagnetische Wellen durchlässigen Material gefertigt. Dadurch sind die Identifizierungseinrichtungen optimal gegen Verletzungen geschützt.

Vorzugsweise werden an den ULDs mindestens zwei voneinander beabstandete Identifizierungseinrichtungen angebracht. Dadurch kann einerseits eine erhöhte Redundanz sichergestellt werden, in dem die auszulesenden Daten doppelt vorliegen. Weiterhin ergibt sich dadurch eine erhöhte Unempfindlichkeit gegenüber zu großen Distanzen zwischen Leseeinrichtung und Identifizierungseinrichtung, da bei einer geeigneten Anbringung an den ULDs immer mindestens eine Identifizierungseinrichtung nahe einer Leseeinrichtung beim Einfahren der ULDs in den Frachtraum oder beim dortigen Positionieren vorliegt.

Eine ähnliche Wirkung kann man dadurch erzielen, dass eine Identifizierungseinrichtung einen Transponder umfasst, der mindestens zwei in einem Winkel zueinander stehende Antennenrichtungen aufweist. Damit kann eine derart verbesserte Richtcharakteristik erzielt werden, dass eine größere Unempfindlichkeit gegenüber zu großen Distanzen oder ungünstigen Positionierungen erzielt wird. In beiden Fällen aber, also sowohl bei mehreren voneinander beabstandeten Identifizierungseinrichtungen ebenso wie bei mindestens zwei in einem Winkel zueinander stehenden Antenneneinrichtungen ist es möglich, die Sende- und Empfangseinrichtungen in den Identifizierungseinrichtungen auch zu einer Positionserkennung der ULDs zu verwenden. Dies kann sowohl über Laufzeit- bzw. Phasenvergleiche oder ggf. auch über Amplitudenvergleiche der Sende- bzw. Empfangssignale geschehen.

Bei einer weiteren Ausführungsform der Erfindung ist eine ULD-Lesevorrichtung an den ULDs derart angebracht, dass beim oder nach einem Einladen von Frachtgut dessen Identifizierungsdaten über die ULD- Lesevorrichtung ausgelesen und in den mit ihr verbundenen Identifizierungseinrichtungen gespeichert werden. Alternativ oder zusätzlich können die Identifizierungsdaten über Sendeeinrichtungen, die auch an den ULDs angebracht sein können, zum Speichern an einen entfernten Ort gesendet werden. Hierbei sind also am Frachtgut selbst auch wieder Identifizierungseinrichtungen angebracht, die jedes Frachtgutstück (oder auch Gruppen hiervon) für die ULD-Lesevorrichtung identifizierbar machen.

Die erste (oder auch eine andere) Sendeeinrichtung ist vorzugsweise derart ausgebildet, dass die ersten und/oder die zweiten und/oder dritte Daten, welche Positionsdaten des Flugzeugs umfassen, während eines Fluges unter Einbeziehung einer zweiten Sendeeinrichtung, die im Flugzeug installiert ist, gesendet werden. Auf diese Weise steht zum Einen eine weitere (lange) Zeitspanne zur Verfügung, um Frachtgutdaten an die beteiligten Logistikunternehmen, den Landeflugplatz usw. zu senden. Zum Anderen ist es dadurch möglich, den Weg des Frachtgutes und seine jeweils momentane Position exakt zu verfolgen, so dass insbesondere bei einer Teil-Entladung des Frachtgutes verloren gehende Frachtgutstücke verfolgbar sind.

In einer weiteren Ausführungsform umfassen die Identifizierungseinrichtungen Empfangseinrichtungen zum Empfangen von die einzelnen Frachtgutstücke beschreibende Daten von einzelnen Frachtgutstücken des Frachtguts. Die Identifizierungseinrichtungen können von den einzelnen Frachtgutstücken, z.B. mit Hilfe eines RFID-Tags, ausgesandte, die einzelnen Frachtgutstücke beschreibenden Daten empfangen. Die das Frachtgut beschreibende Daten müssen dadurch nicht manuell in die Identifizierungseinrichtung eingegeben werden.

Bevorzugt umfasst die ULD einen elektrisch leitfähigen Boden und/oder eine elektrisch leitfähige Decke (oder auch Wand) als eine Antenne zum Senden der ersten Daten und/oder der das Frachtgut beschreibenden Daten an eine der Leseeinrichtungen. Die Leseeinrichtungen können erste Leseeinrichtungen und/oder ULD-Lesevorrichtungen sein. Ein Vorteil hiervon ist, dass man eine großflächige Antenne zum Senden hat, die einerseits eine größere Empfindlichkeit hat und die sich andererseits bei Bewegungen der ULD durch ihre großflächige Ausdehnung länger im Empfangsbereich der Leseeinrichtungen aufhält, und man somit mehr Zeit hat, die das Frachtgut beschreibende Daten der ULD mit einem der Leseeinrichtungen zu erfassen. Die Geschwindigkeit mit der die ULD durch den Empfangsbereich der Leseeinrichtungen bewegt wird, kann somit erhöht werden.

Das erfindungsgemäße Verfahren zum Beladen eines Laderaums eines Flugzeugs löst die eingangs definierte Aufgabe wie folgt:
- Container, Paletten oder dergleichen ULDs zur Aufnahme von Frachtgut werden durch eine Zugangsöffnung in den Laderaum eingebracht und mittels Fördereinrichtungen transportiert und in Beförderungspositionen befestigt;
- mit den ULDs werden Identifizierungseinrichtungen, insbesondere RFID-Transponder verbunden, welche Speichereinrichtungen zum Speichern von ersten Daten, insbesondere von Identifizierungsdaten aufweisen;
- mittels mindestens einer ersten Lesevorrichtung werden erste Daten einer in den Laderaum eingebrachten ULDs gelesen und
- die ersten Daten werden mittels mindestens einer ersten Sendeeinrichtung an mindestens einen ersten Empfänger gesendet.

Die abhängigen Ansprüche 2 bis 14 beschreiben ebenfalls das als erfindungsgemäß betrachtete Verfahren.

Nachfolgend wird die Erfindung anhand der beigefügten schematischen Zeichnungen näher erläutert. Hierbei zeigen
- Fig. 1: Eine erste Ausführungsform der Erfindung,
- Fig. 2: Eine zweite Ausführungsform der Erfindung ähnlich der nach Figur 1,
- Fig. 3: Eine Draufsicht auf einen Container oder eine Palette mit angedeuteter Anbringung von Identifizierungseinrichtungen und
- Fig. 4: Einen Schnitt entlang der Linie IV-IV aus Figur 3.

In der nachfolgenden Beschreibung werden für gleiche und gleich wirkende Teile dieselben Bezugsziffern verwendet.

Frachtgut 21, von dem hier eine Gruppe von acht Stücken dargestellt ist, ist mit Identifizierungseinrichtungen 31 versehen. Das Frachtgut 21 wird in eine hier als Container dargestellte ULD 20 für das Frachtgut 21 eingeladen. Dabei werden die Identifizierungseinrichtungen 31 über eine Leseeinrichtung 41 ausgelesen. Weiterhin wird eine Identifizierungseinrichtung 30, die am Container 20 unverlierbar angebracht ist, über die Leseeinrichtung 41 ausgelesen. Diese Daten werden über eine Sendeeinrichtung 52 und ein öffentliches Mobilfunknetz 10 (oder über ein satellitengestütztes System) einem ersten Empfänger 11, der als Server ausgebildet ist, mitgeteilt. Von diesem können die Daten zu Clients 12-18, z.B. Logistik- oder Serviceunternehmen, Speditionen, Flughäfen usw. weitergegeben werden. Es liegt somit an dieser Stelle eine klare Zuordnung des Frachtguts 21 zu einem bestimmten, identifizierbaren Container 20 vor. Die Frachtgutdaten können auch über die Leseeinrichtung 41 in beschreibbare Speicher eingeschrieben werden, die in den Identifizierungseinrichtungen 30 des Containers 20 vorgesehen sind. In diesem Fall sind dann also die Frachtgutdaten in der am Container unverlierbar angebrachten Identifizierungseinrichtung 30 abrufbar gespeichert.

Die beladenen Container 20 werden durch eine Zugangsöffnung 3 in einen Laderaum 2 eines Flugzeugs 1 eingebracht. Dabei werden die Identifizierungseinrichtungen 30 mittels einer Leseeinrichtung 40 ausgelesen. Die Leseeinrichtung 40 ist als Tor an der Zugangsöffnung bzw. Tür 3 des Laderaums 2 ausgebildet, so dass ein Auslesen der Identifizierungseinrichtungen 30 (und gegebenenfalls auch der Identifizierungseinrichtungen 31) ohne Weiteres möglich ist. Diese Identifizierungseinrichtungen werden vorzugsweise als RFID-Transponder ausgebildet, welche vorzugsweise im UHF-Bereich arbeiten, also in Europa bei 868 MHz und in den USA bei 915 MHz.

Die durch die Leseeinrichtung 40 ausgelesenen Daten werden einem Lade-Steuercomputer 61 (oder einem gesonderten Computer der ggf. mit dem Lade-Steuercomputer 61 verbunden ist) mitgeteilt, der im Flugzeug 1 angebracht ist. Dieser Lade-Steuercomputer 61 hat primär die Aufgabe, Fördereinrichtungen 60, z.B. so genannte Power Drive Units (PDUs) über eine Ein- und Ausgabevorrichtung 62 zu steuern und deren Funktionen zu überwachen. Tritt an einer PDU 60 ein Problem auf, so wird dieses über entsprechende Sensoren erkannt und dem Lade-Steuercomputer 61 mitgeteilt. Dieser sendet dann eine entsprechende Nachricht über eine Sendeeinrichtung 50 in das öffentliche Netz 10, so dass ein am Zielflughafen etabliertes Serviceunternehmen, das dann z.B. den Client 13 darstellt, informiert werden kann und nach der Landung des Flugzeugs 1 die entsprechenden Reparaturmaßnahmen leicht vornehmen kann, da genügend Vorbereitungszeit zur Verfügung stand.

Die von der Leseeinrichtung 40 ausgelesenen Daten werden über denselben Weg, also den Lade-Steuercomputer 51 und die ihm zugeordnete Sendeeinrichtung 50 ins öffentliche Mobilfunknetz 10 übermittelt und von dort aus dem interessierten Logistikunternehmen (Client 12-18) mitgeteilt.

Weiterhin ist an der Zugangsöffnung 3 des Laderaums 2 eine Erkennungsvorrichtung 42 vorgesehen, welche feststellt, ob sich im Bereich der Zugangsöffnung 3 ein Container 20 oder eine andere ULD befindet. Ist dies der Fall und kann die Leseeinrichtung 40 "keinen Kontakt" zu einer Identifizierungseinrichtung 30 feststellen, so bedeutet dies, dass die Identifizierungseinrichtung 30 des gerade einfahrenden Containers 20 funktionsunfähig ist oder der Container 20 eben keinerlei Identifizierungseinrichtung aufweist. In diesem Fall kann das Bedienungspersonal über die Eingabe-/Ausgabevorrichtung 62 des Lade-Steuercomputers entsprechende Daten manuell eingeben. Die Eingabe-/Ausgabevorrichtung 62 des Lade-Steuercomputers 61 dient also zum einen zur Bedienung der Fördereinrichtungen 60 und zum anderen auch dazu, Frachtdaten einzugeben, die dann im Lade-Steuercomputer 61 (bzw. einem gesonderten Computer) gespeichert und über die Sendeeinrichtung 50 weitergegeben werden.

Weiterhin sind im Laderaum 2 Umweltsensoren 63 vorgesehen, über welche beispielsweise die Temperatur oder Feuchtigkeit im Laderaum 2 gemessen und über den Lade-Steuercomputer 61 und die Sendeeinrichtung 50 an den interessierten Client 12, 13 gesendet werden können. Dieser Sendevorgang findet vorzugsweise nach Beendigung eines Fluges statt, so dass die Umweltdaten zunächst im Lade-Steuercomputer 61 zwischengespeichert werden.

Weiterhin ist es möglich, die Identifizierungseinrichtungen zusätzlich mit Umweltsensoren auszustatten, deren Daten dann in den Identifizierungseinrichtungen 30 gespeichert werden. Somit kann jeder der Container 20 über "seine Transportgeschichte" Auskunft geben. Dies kann beispielsweise beim Entladen durch Auslesen mittels der Leseeinrichtung 40 geschehen.

In den beiliegenden Zeichnungen ist mit der Bezugsziffer 51 eine weitere Sendeeinrichtung bezeichnet, die ein Senden von Daten während eines Fluges ermöglicht. Diese Sendeeinrichtung 51 steht vorzugsweise mit dem Lade-Steuercomputer 61 bzw. mit der Sendeeinrichtung 50 derart in Verbindung, dass Daten, welche aus irgendwelchen Gründen (z.B. Störung des öffentlichen Netzes am Startflughafen) nicht gesendet werden konnten. Weiterhin ist es möglich, während des Fluges Positionsdaten zu senden, die mittels eines GPS-Systems im Lade-Steuercomputer 61 generiert werden. Auf diese Weise ist es möglich, den interessierten Client 12-18 (z.B. ein Logistikunternehmen) kontinuierlich über den Aufenthalt des zu befördernden Frachtgutes zu informieren.

Der Lade-Steuercomputer 61 weist Speichereinrichtungen zum Speichern und Eingabeeinrichtungen 62 zum Eingeben von Soll-Frachtgutdaten auf. Es sind Vergleicheinrichtungen vorgesehen, um die zweiten Daten, nämlich die aus den Identifizierungseinrichtungen 31 des Frachtguts 21 ausgelesenen Daten mit den Soll-Frachtgutdaten zu vergleichen. Eine Warnmeldung (optisch und/oder akustisch) wird dann ausgegeben, wenn keine Übereinstimmung besteht. Selbstverständlich ist es möglich, zur Eingabe der Soll-Frachtgutdaten nicht die Eingabeeinrichtung 62 vorzusehen, sondern die Daten elektronisch über die Sendeeinrichtung 50 in den Lade-Steuercomputer 61 einzugeben. Unter dem Begriff "Sendeeinrichtung" ist somit immer eine komplette Sende- und Empfangseinheit zu verstehen.

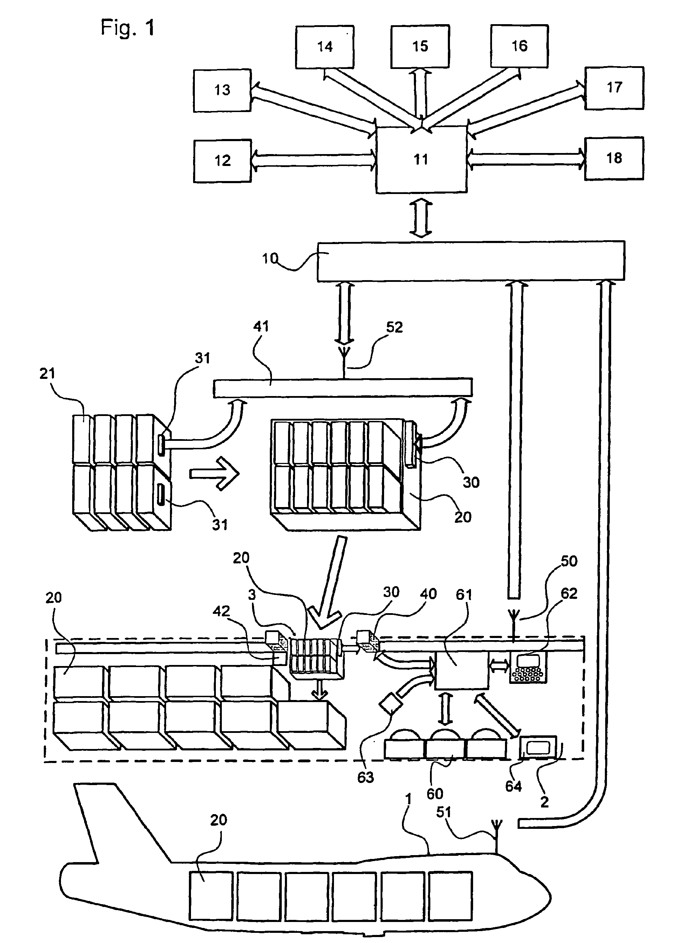

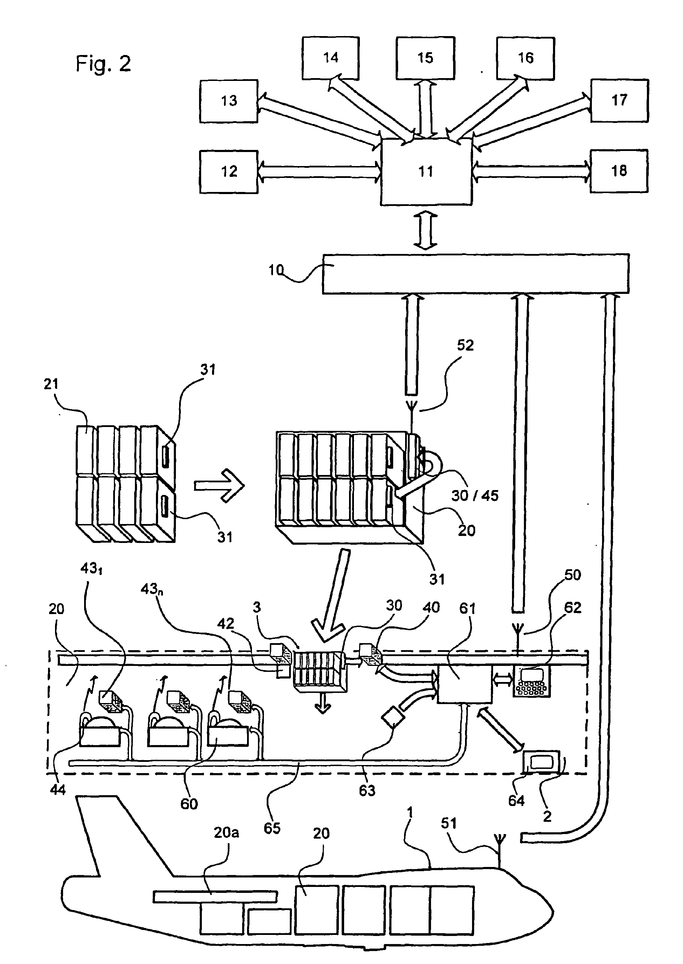

Die in Figur 2 gezeigte Ausführungsform der Erfindung unterscheidet sich von der nach Figur 1 durch mehrere Merkmale.

Bei der Ausführungsform nach Figur 1 werden die Frachtgutdaten aus den am Frachtgut 21 angebrachten Identifizierungseinrichtungen 31 mittels einer zweiten Leseeinrichtung 41 in die Identifizierungseinrichtung 30 eingelesen, welche am Container 20 befestigt ist. Bei der in Figur 2 gezeigten Ausführungsform ist am Container 20 nicht nur eine Identifizierungseinrichtung 30 sondern auch eine ULD- Leseeinrichtung 45 vorgesehen, welche die Daten aus den Identifizierungseinrichtungen 31 ausliest und speichert. Dies hat den Vorteil, dass für das Auslesen eine größere Zeitspanne zur Verfügung steht und sichergestellt werden kann, dass tatsächlich nur das im Container 20 befindliche Frachtgut erkannt wird.

Weiterhin sind bei der in Figur 2 gezeigten Ausführungsformen die PDUs 60 über ein Bus-System 65 mit dem Lade-Steuercomputer 61 verbunden. Darüber hinaus sind an oder bei den PDUs 60 Leseeinrichtungen 43₁-43ₙ vorgesehen, die über dasselbe Bus-System mit dem Lade-Steuercomputer 61 verbunden sind. Es wird somit das an sich im Laderaum 2 für einen anderen Zweck (zur Ansteuerung der PDUs 60 und zum Empfang von Daten aus den PDUs 60) schon vorhandene Bus-System 65 zu einem ganz anderen Zweck verwendet, nämlich um die Leseeinrichtungen 43₁-43ₙ in Kommunikationsverbindung mit dem Lade-Steuercomputer 61 zu bringen. Durch die Anbringung der Leseeinrichtungen 43₁-43ₙ oder bei den PDUs 60 und zwar insbesondere im Bodenbereich ist es möglich, die Identifizierungseinrichtungen 31 innerhalb des Laderaums 2 auszulesen.

Weiterhin weisen die PDUs 60 in an sich bekannter Weise Sensoreinrichtungen 44 auf, welche vorgesehen sind, um festzustellen, wenn sich ein Container 20 im Bereich einer PDU 60 befindet. Dieselben Sensoreinrichtungen 44 könnten nun auch verwendet werden, um (hier nicht gezeigte) Identifizierungseinrichtungen an den ULDs 20 auszulesen und die Daten (wieder über das Bus-System 65) an den Lade-Steuercomputer 61 (oder einen weiteren Computer) zu übermitteln.

In Figur 2 ist schließlich auch gezeigt, dass eine ULD 20 ein Sonderfrachtgut 20a umfassen kann, welches eine bestimmte Unterbringungsart im Laderaum 2 des Flugzeugs 1 erfordert. Hierbei wird vor dem Einfahren des Sonderfrachtgutes 20a ein Satz von Abmessungsdaten in die zugehörige Identifizierungseinrichtung 30 eingelesen, die dann beim Einfahren in den Frachtraum 2 dem Lade-Steuercomputer 61 mitgeteilt werden. Daraufhin berücksichtigt dieser sowohl beim Aussuchen einer Stauposition als auch während des Einfahrvorganges selbst die besonderen Dimensionen des Frachtgutes 20a. Derartige Frachtgutdaten, insbesondere das Gewicht des Frachtgutes 21 und dessen Verteilung innerhalb der ULDs 20 können ebenfalls in den Identifizierungseinrichtungen 30/31 gespeichert sein, so dass der Frachtgut-Ladecomputer 61 diese Daten beim Trimmen des Flugzeugs entsprechend berücksichtigen kann.

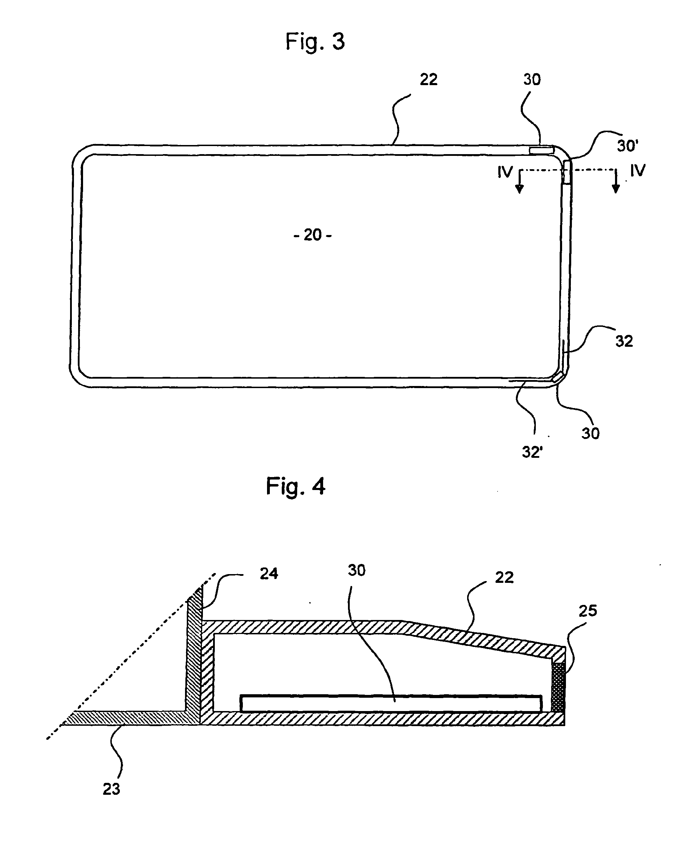

In den Figuren 3 und 4 ist - stark schematisiert - eine ULD in Draufsicht (Figur 3) bzw. in einer Schnittansicht entlang der Linie IV-IV aus Figur 3 gezeigt. Die ULD 20, z.B. ein Container weist einen nach außen hervorstehenden (meist genormten) Unterrand auf, der im Wesentlichen fluchtend mit einem Boden 23 von einer Seitenwand 24 des Containers 20 nach außen hervorsteht. Dieser Unterrand 22 dient üblicherweise u.a. zum Verzurren bzw. Verriegeln der Container 20 in ihrer Stauposition. Bei der in den Figuren 3 und 4 gezeigten Ausführungsform des Containers 20 ist dieser Unterrand 22 als Hohlprofil (insbesondere als Strangpressprofil) ausgebildet. In dem so geschaffenen Hohlraum ist bei der Ausführungsform gemäß Figur 3 in der Ecke oben rechts eine erste Anordnung von zwei Identiizierungseinrichtungen 30, 30' gezeigt. Diese Identifizierungseinrichtungen sind an zwei senkrecht aufeinander stehenden Seitenabschnitten des Unterrandes 22 angebracht, so dass beim Vorbeifahren des Containers 20 an Leseeinrichtung 40, 41 eine Richtungsunabhängigkeit erzielt wird. Darüber hinaus ist es möglich, durch entsprechende elektronische Maßnahmen (Laufzeit- oder Phasenvergleich) der Sende- und Empfangssignale, die zwischen den Identifizierungseinrichtungen 30, 30' und den Leseeinrichtungen 40, 41 ausgetaucht werden, Richtungs- und Geschwindigkeitsinformationen bezüglich des zugehörigen Containers 20 zu erhalten. Diese Informationen können im Lade-Steuercomputer 61 beim Einfahren der Container 20 in den Frachtraum 2 zum Erzielen günstiger Beförderungsgeschwindigkeiten und Stauplätze verwendet werden.

Bei der in Figur 3 rechts unten gezeigten Anordnung ist eine Identifizierungseinrichtung 30 mit zwei senkrecht zueinander stehenden Antenneneinrichtungen 32, 32' versehen, mittels derer ebenfalls Positions- und/oder Geschwindigkeitsdaten gewonnen werden können.

Schließlich ist in Figur 4 noch angedeutet, dass der Unterrand 22, der üblicherweise aus Aluminium oder dergleichen stabilem Metall besteht, im Bereich der Identifizierungseinrichtung 30 durchbrochen und mit für elektromagnetische Wellen durchlässigem Material 25 verschlossen ist. Dadurch ist ein leichtes Auslesen der Daten aus der Identifizierungseinrichtung 30 möglich. Selbstverständlich kann die Identifizierungseinrichtung 30 auch im Hohlraum in entsprechendem Material eingegossen sein, was eine erhöhte Sicherheit gegen Beschädigung mit sich bringt. Um ein Auslesen von Daten mittels einer Leseeinrichtung zu ermöglichen, die im Boden des Frachtraums eingebaut ist, kann (zumindest im Bereich von Antenneneinrichtungen der Identifizierungseinrichtung 30) der Unterrand 22 auf seiner Unterseite mit durchlässigem Material 25 ausgebildet sein.

### Bezugszeichenliste

- 1: Flugzeug
- 2: Laderaum
- 3: Zugangsöffnung
- 10: öffentliches Netz
- 11: erster Empfänger/Server
- 12-18: Client
- 20: ULD/Container
- 20a: Sonderfrachtgut
- 21: Frachtgut
- 22: Unterrand
- 23: Boden
- 24: Seitenwand
- 25: durchlässiges Material
- 30: Identifizierungseinrichtung/RFID-Tag
- 31: weitere Identifizierungseinrichtung/RFID-Tag
- 32,32': Antenneneinrichtung
- 40: erste Leseeinrichtung
- 41: zweite Leseeinrichtung
- 43₁-43ₙ: Leseeinrichtung
- 42: Erkennungseinrichtung
- 44: Sensoreinrichtung
- 45: ULD-Leseeinrichtung
- 50: erste Sendeeinrichtung
- 51: zweite Sendeeinrichtung
- 52: dritte Sendeeinrichtung
- 60: Fördereinrichtung (PDU)
- 61: Lade-Steuercomputer (Cargo Control Computer CCC)
- 62: Eingabe-/Ausgabevorrichtung (Control Panel)
- 63: Umweltsensoren
- 64: Anzeigeeinrichtung
- 65: Bus-System

## Patentansprüche

1. Beladungssystem zum Beladen eines Laderaums (2) eines Flugzeugs (1), wobei Container, Paletten oder dergleichen Unit-Load-Devices (ULD, 20) zur Aufnahme von Frachtgut (21) durch eine Zugangsöffnung (3) in den Laderaum (2) eingebracht, mittels Fördereinrichtungen (60) transportiert und in Beförderungspositionen befestigt werden, wobei ein Lade-Steuercomputer (61) vorgesehen ist,
umfassend
- mit den ULDs (20) verbundene Identifizierungseinrichtungen (30), z.B. RFID-Transponder (Tags), welche Speichereinrichtungen zum Speichern von ersten Datenaufweisen,
- mindestens eine erste Leseeinrichtung (40) zum Lesen der ersten Daten einer in den Laderaum (2) eingebrachten ULD (20) und
- mindestens eine erste Sendeeinrichtung (50) zum Senden der ersten Daten an mindestens einen ersten Empfänger (11)
**dadurch gekennzeichnet, dass**
- die erste Sendeeinrichtung (50) Sende-/Empfangseinrichtungen mehrerer Standards in Bezug auf Arbeitsfrequenzen, Kodierung und/oder Protokolle aufweist.

2. Beladungssystem nach Anspruch 1,
**dadurch gekennzeichnet, dass**
der Lade-Steuercomputer (61) die erste Sendeeinrichtung (50) umfasst oder mit dieser verbunden ist zum Steuern der Fördereinrichtungen (60).

3. Beladungssystem nach Anspruch 1,
**dadurch gekennzeichnet, dass**
der Lade-Steuercomputer (61) die erste Sendeeinrichtung (50) umfasst oder mit dieser verbunden ist zum Überwachen der Fördereinrichtungen (60).

4. Beladungssystem nach Anspruchs 1,
**dadurch gekennzeichnet, dass**
der Lade-Steuercomputer (61) die erste Sendeeinrichtung (50) umfasst oder mit dieser verbunden ist zum Steuern und Überwachen der Fördereinrichtungen (60).

5. Beladungssystem nach einem der vorhergehenden Ansprüche,
**dadurch gekennzeichnet, dass**
der Lade-Steuercomputer (61) derart ausgebildet ist, dass zweite Daten, insbesondere Fehlerdaten über Fehler an den Fördereinrichtungen (60) an den mindestens einen ersten Empfänger (11) gesendet werden.

6. Beladungssystem nach einem der vorhergehenden Ansprüche,
**dadurch gekennzeichnet, dass**
die erste Sendeeinrichtung (50) derart ausgebildet ist, dass die ersten und/oder zweiten Daten vor einem Start des Flugzeugs (1) gesendet werden.

7. Beladungssystem nach einem der vorhergehenden Ansprüche,
**dadurch gekennzeichnet, dass**
im Laderaum (2) und/oder an den ULDs (20) Umweltsensoren (63) zum Aufnehmen von Umweltdaten, z.B. Temperatur oder Feuchtigkeit vorgesehen sind, wobei die Daten in den Identifizierungseinrichtungen (30) gespeichert werden.

8. Beladungssystem nach einem der vorhergehenden Ansprüche,
**dadurch gekennzeichnet, dass**
die erste Sendeeinrichtung (50) zum Senden von Signalen in Mobilfunknetze und/oder Satellitennetze ausgebildet ist.

9. Beladungssystem nach einem der vorhergehenden Ansprüche,
**dadurch gekennzeichnet, dass**
die erste Leseeinrichtung (40) zur Kommunikation mit den Identifizierungseinrichtungen (30) basierend auf verschiedenen Standards ausgebildet ist, z.B. eine Kommunikation mit RFID-Transpondern bei 868 MHz und 915 MHz ermöglicht.

10. Beladungssystem nach einem der vorhergehenden Ansprüche,
**dadurch gekennzeichnet, dass**
der mindestens eine erste Empfänger (11) zur Weitergabe empfangener Daten an weitere Empfänger (12-18)ausgebildet ist.

11. Beladungssystem nach einem der vorhergehenden Ansprüche,
**dadurch gekennzeichnet, dass**
die erste Leseeinrichtung (40) mit einer Erkennungsvorrichtung (42) verbunden ist, welche die Anwesenheit einer ULD (20) bei der ersten Leseeinrichtung (40) feststellt, um ULDs (20) ohne Identifizierungseinrichtung (30) zu erkennen, so dass diese manuell identifizierbar sind.

12. Beladungssystem nach einem der vorhergehenden Ansprüche,
**dadurch gekennzeichnet, dass**
eine Standard-Erkennungseinrichtung vorgesehen ist, die entweder aufgrund von Positionsdaten oder aufgrund von Testsignalen die Sendeeinrichtungen (50) entsprechend am Standort gültigen Standards zum Senden von Daten einstellt.

13. Beladungssystem nach einem der vorhergehenden Ansprüche, insbesondere nach Anspruch 9,
**dadurch gekennzeichnet, dass**
die Leseeinrichtung (40, 41) derart ausgebildet ist, dass die verschiedenen Standards, z.B. RFID-Standards durchgeprüft und die Leseeinrichtung (40, 41) dann auf einen bestimmten Standard eingestellt wird, wenn eine Identifizierungseinrichtung (30, 31) auf einen Signalempfang der in diesem Standard sendenden Leseeinrichtung (40, 41) antwortet.

14. Beladungssystem nach einem der vorhergehenden Ansprüche,
**dadurch gekennzeichnet, dass**
die Identifizierungseinrichtungen (30) Abmessungsdatenspeichereinrichtungen umfassen, in denen Abmessungen der ULDs (20, 20a) einschließlich des Frachtgutes (21) speicherbar und von der Leseeinrichtung (40) derart auslesbar sind, dass im Lade-Steuercomputer (61) ein günstiger, kollisionsfreier Stauplatz für diese ULD (20a) im Laderaum (2) feststellbar ist.

15. Verfahren zum Beladen eines Laderaums eines Flugzeugs, wobei Container, Paletten oder dergleichen ULDs zur Aufnahme von Frachtgut durch eine Zugangsöffnung in den Laderaum eingebracht, mittels Fördereinrichtungen transportiert und in Beförderungspositionen befestigt werden, wobei mit den ULDs Identifizierungseinrichtungen verbunden werden, welche Speichereinrichtungen aufweisen, in welchen erste Datengespeichert werden, wobei die ersten Daten einer in den Laderaum eingebrachten ULD von einer ersten Leseeinrichtung ausgelesen und mittels einer Sendeeinrichtung an mindestens einen ersten Empfänger gesendet werden, wobei eine von mehreren Sende-/Empfangseinrichtungen mehrerer Standards in Bezug auf Arbeitsfrequenzen, Kodierung und/oder Protokolle der ersten Sendeeinrichtung zur Übertragung der ersten Daten an den mindestens einen ersten Empfänger ausgewählt wird.

## Claims

1. Loading system for loading a loading bay (2) of an aircraft (1), wherein containers, pallets or similar unit load devices (ULD, 20) for accommodating freight (21) are introduced into the loading bay (2) through an access opening (3), are transported by means of conveyor devices (60) and are secured in transportation positions, a loading-control computer (61) being provided,
comprising
- identification devices (30), for example RFID transponders (tags), connected to the ULDs (20), which identification devices have storage devices for storing first data,
- at least one first reading device (40) for reading the first data of a ULD (20) introduced into the loading bay (2), and
- at least one first transmitting device (50) for transmitting the first data to at least one first receiver (11),
**characterised in that**
- the first transmitting device (50) has transmitting/receiving devices of a plurality of standards in respect of operating frequencies, coding and/or protocols.

2. Loading system according to claim 1,
**characterised in that**
the loading-control computer (61) comprises the first transmitting device (50), or is connected thereto, for controlling the conveyor devices (60).

3. Loading system according to claim 1,
**characterised in that**
the loading-control computer (61) comprises the first transmitting device (50), or is connected thereto, for monitoring the conveyor devices (60).

4. Loading system according to claim 1,
**characterised in that**
the loading-control computer (61) comprises the first transmitting device (50), or is connected thereto, for controlling and monitoring the conveyor devices (60).

5. Loading system according to any one of the preceding claims,
**characterised in that**
the loading-control computer (61) is configured in such a way that second data, especially error data relating to errors at the conveyor devices (60), are transmitted to the at least one first receiver (11).

6. Loading system according to any one of the preceding claims,
**characterised in that**
the first transmitting device (50) is configured in such a way that the first and/or second data are transmitted before the aircraft (1) takes off.

7. Loading system according to any one of the preceding claims,
**characterised in that**
in the loading bay (2) and/or on the ULDs (20) there are provided environment sensors (63) for recording environment data, for example temperature or humidity, the data being stored in the identification devices (30).

8. Loading system according to any one of the preceding claims,
**characterised in that**
the first transmitting device (50) is configured for transmitting signals into mobile networks and/or satellite networks.

9. Loading system according to any one of the preceding claims,
**characterised in that**
the first reading device (40) is configured for communicating with the identification devices (30) based on different standards, for example allows communication with RFID transponders at 868 MHz and 915 MHz.

10. Loading system according to any one of the preceding claims,
**characterised in that**
the at least one first receiver (11) is configured for forwarding received data to further receivers (12-18).

11. Loading system according to any one of the preceding claims,
**characterised in that**
the first reading device (40) is connected to a recognition device (42) which ascertains the presence of a ULD (20) in the first reading device (40) in order to recognise ULDs (20) without an identification device (30) so that the latter can be identified manually.

12. Loading system according to any one of the preceding claims,
**characterised in that**
a standard-recognition device is provided which, either on the basis of positional data or on the basis of test signals, sets the transmitting devices (50) in accordance with data transmission standards applicable at the location.

13. Loading system according to any one of the preceding claims, especially according to claim 9,
**characterised in that**
the reading device (40, 41) is configured in such a way that the different standards, for example RFID standards, are checked and the reading device (40, 41) is then set to a specific standard when an identification device (30, 31) responds to receiving a signal from the reading device (40, 41) transmitting **in that** standard.

14. Loading system according to any one of the preceding claims,
**characterised in that**
the identification devices (30) comprise dimension data storage devices in which dimensions of the ULDs (20, 20a), including the freight (21), can be stored and read out by the reading device (40) in such a way that in the loading-control computer (61) an advantageous, collision-free stowage position for that ULD (20a) in the loading bay (2) can be ascertained.

15. Method of loading a loading bay of an aircraft, wherein containers, pallets or similar ULDs for accommodating freight are introduced into the loading bay through an access opening, are transported by means of conveyor devices and are secured in transportation positions, wherein identification devices are connected to the ULDs, which identification devices have storage devices in which first data are stored, the first data of a ULD introduced into the loading bay being read out by a first reading device and transmitted by means of a transmitting device to at least one first receiver, wherein one of a plurality of transmitting/receiving devices of a plurality of standards in respect of operating frequencies, coding and/or protocols in the first transmitting device is selected to transmit the first data to the at least one first receiver.

## Revendications

1. Système de chargement pour le remplissage d'une zone de chargement (2) d'un avion (1), dans lequel des containers, des palettes ou d'autres unités de chargement du même type (ULD, 20) pour le transport de fret (21) sont introduits par une ouverture d'accès (3) dans la zone de chargement (2), sont transportés grâce à des convoyeurs (60) et sont fixés dans des positions de transport, un ordinateur de commande (61) du chargement étant prévu,
ledit système comprenant
- des moyens d'identification (30) associés aux ULD (20), par exemple des transpondeurs (Tags) RFID, qui possèdent des moyens d'enregistrement pour l'enregistrement d'un premier jeu de données,
- au moins un premier moyen de lecture (40) pour la lecture du premier jeu de données d'un ULD (20) introduit dans la zone de chargement (2) et
- au moins un premier moyen d'émission (50) pour l'émission du premier jeu de données vers au moins un premier récepteur (11)
**caractérisé en ce que**
- le premier moyen d'émission (50) présente plusieurs normes en matière de fréquence de travail, de codage et/ou de protocoles.

2. Système de chargement selon la revendication 1, **caractérisé en ce que** l'ordinateur de commande (61) du chargement comprend le premier moyen d'émission (50) ou est associé avec celui-ci pour piloter les convoyeurs (60).

3. Système de chargement selon la revendication 1, **caractérisé en ce que** l'ordinateur de commande (61) du chargement comprend le premier moyen d'émission (50) ou est associé avec celui-ci pour surveiller les convoyeurs (60).

4. Système de chargement selon la revendication 1, **caractérisé en ce que** l'ordinateur de commande (61) du chargement comprend le premier moyen d'émission (50) ou est associé avec celui-ci pour piloter et surveiller les convoyeurs (60).

5. Système de chargement selon l'une quelconque des revendications précédentes, **caractérisé en ce que** l'ordinateur de commande (61) du chargement est construit de telle façon à ce qu'un deuxième jeu de données, en particulier des données d'erreurs concernant les erreurs relatives aux convoyeurs (60) sont envoyées vers le au moins un premier récepteur (11).

6. Système de chargement selon l'une quelconque des revendications précédentes, **caractérisé en ce que** le premier moyen d'émission (50) est construit de telle façon à ce que le premier et/ou le second jeu de données est envoyé avant le démarrage de l'avion (1).

7. Système de chargement selon l'une quelconque des revendications précédentes, **caractérisé en ce que** des capteurs d'environnement (63) sont prévus dans la zone de chargement (2) et/ou sur les ULDs (20) pour l'enregistrement de données d'environnement, comme par exemple la température ou l'humidité, ces données étant enregistrées par les moyens d'identification (30).

8. Système de chargement selon l'une quelconque des revendications précédentes, **caractérisé en ce que** les premiers moyens d'émission (50) sont construits de manière à envoyer des signaux dans le réseau de téléphonie mobile et/ou dans le réseau satellitaire.

9. Système de chargement selon l'une quelconque des revendications précédentes, **caractérisé en ce que** les premiers moyens de lecture (40) sont construits de manière à communiquer avec les moyens d'identification (30) en se basant sur différentes normes, par exemple en rendant possible une communication avec des transpondeurs RFID à 868 MHz et 915 MHz.

10. Système de chargement selon l'une quelconque des revendications précédentes, **caractérisé en ce que** le au moins un premier récepteur (11) est construit de manière à transmettre les données reçues à d'autres récepteurs (12-18).

11. Système de chargement selon l'une quelconque des revendications précédentes, **caractérisé en ce que** le premier moyen de lecture (40) est associé à un dispositif de reconnaissance (42), qui détecte la présence d'un ULD (20) au niveau du premier moyen de lecture (40), pour reconnaitre les ULDs(20) dépourvus de moyens d'identification (30), de manière à ce qu'ils soient identifiés manuellement.

12. Système de chargement selon l'une quelconque des revendications précédentes, **caractérisé en ce qu'**un moyen de reconnaissance de normes est prévu, qui configure les moyens d'émission (50) selon les normes valables sur le site, pour l'émission de données, soit sur la base des données de position, ou sur la base des signaux de test.

13. Système de chargement selon l'une quelconque des revendications précédentes, en particulier selon la revendication 9, **caractérisé en ce que** le moyen de lecture (40, 41) est construit de telle façon à ce que les différentes normes, par exemple les normes RFID, soient vérifiées et que le moyen de lecture (40, 41) soit ensuite configuré selon une norme bien définie, lorsqu'un moyen d'identification (30, 31) réagit à la réception d'un signal qui a été envoyé par le moyen de lecture (40, 41) dans cette norme.

14. Système de chargement selon l'une quelconque des revendications précédentes, **caractérisé en ce que** les moyens d'identification (30) comprennent des moyens d'enregistrement des données de mesure, dans lesquels il est possible d'enregistrer des mesures des ULDs (20, 20a) y compris du fret (21) et qui sont accessibles en lecture par les moyens de lecture (40) de telle sorte, qu'un espace de rangement adapté, libre de collisions pour cette ULD (20a) soit déterminable dans la zone de chargement (2) par l'ordinateur de commande (61) du chargement.

15. Procédé de chargement d'une zone de chargement d'un avion, dans lequel des containers, des palettes ou des ULDs du même type pour le transport de fret sont introduits par une ouverture d'accès dans la zone de chargement, sont transportés par des convoyeurs et sont fixés dans des positions de transport, des moyens d'identification étant associés aux ULDs qui comprennent des moyens d'enregistrement, dans lesquels est enregistré un premier jeu de données, le premier jeu de données étant sélectionné par un premier moyen de lecture sur un ULD introduit dans la zone de chargement et ledit jeu de données étant envoyé par l'intermédiaire d'un moyen d'émission vers au moins un premier récepteur, un moyen d'émission/réception de plusieurs normes en matière de fréquence de travail, codage et/ou protocoles du premier moyen d'émission pour la transmission du premier jeu de données vers l'au moins un premier récepteur, étant choisi parmi une pluralité de moyens d'émission/réception.
